**Europäisches Patentamt**

**European Patent Office**

**Office européen des brevets**

(11) Veröffentlichungsnummer: **0 414 891 A1**

## EUROPÄISCHE PATENTANMELDUNG
### veröffentlicht nach Art. 158 Abs. 3
### EPÜ

(21) Anmeldenummer: **89901954.1**

(22) Anmeldetag: **13.01.89**

(86) Internationale Anmeldenummer:
**PCT/SU89/00006**

(87) Internationale Veröffentlichungsnummer:
**WO 89/07178 (10.08.89 89/18)**

(51) Int. Cl.⁵: **E02F 5/18, F16L 1/028**

(30) Priorität: **28.01.88 SU 4372413**

(43) Veröffentlichungstag der Anmeldung:
**06.03.91 Patentblatt 91/10**

(84) Benannte Vertragsstaaten:
**DE FR GB IT SE**

(71) Anmelder: **MOSKOVSKY GORNY INSTITUT**
**Leninsky pr. 6**
**Moscow, 117049(SU)**

(72) Erfinder: **KANTOVICH, Leonid Ivanovich**
**pr. Mira, 74-55**
**Moscow, 129041(SU)**

Erfinder: **GRIGORIEV, Sergei Mikhailovich**
**ul. Festivalnaya, 73-48**
**Moscow, 125414(SU)**
Erfinder: **SVECHKOPALOV, Anatoly Petrovich**
**ul. Konenkova, 14-132**
**Moscow, 127560(SU)**
Erfinder: **VASIN, Sergei Alexandrovich**
**ul. Mytnaya, 58-13**
**Moscow, 113162(SU)**

(74) Vertreter: **Patentanwälte Zellentin & Partner**
**Zweibrückenstrasse 15**
**W-8000 München 2(DE)**

(54) **VERFAHREN UND ANORDNUNG ZUR VERLEGUNG VON LEITUNGEN OHNE GRÄBEN.**

(57) Gemäss dem Verfahren werden durch den Erdboden Rohrleitungssektionen durchgedrückt, die vom Hauptmassiv des Erdbodens einen Teil abtrennen, der sich innerhalb der Sektionen befindet und zusammen mit ihnen entfernt wird. In dem Maße, wie die Sektionen samt dem Erdboden entfernt werden, wird eine stationäre Rohrleitung verlegt. In der Vorrichtung werden die Rohrleitungssektionen (5) in den Boden (1) mittels einer Kraftanlage (6) und hydraulischer Zwischenkraftanlagen (8) durchgedrückt, die zwischen den Sektionen (5) angeordnet sind, deren jede einen mit einem Hydrauliksystem in Verbindung stenenden, von zwei an der vorhergehenden Sektion fest angebrachten Ringen (9, 10) gebildeten Hohlraum zum Erzeugen eines Drucks auf das Stirnende der vorhergehenden Sektion aufweist. In den Spalt zwischen den Ringen wird das vordere Stirnende der nachfolgenden Sektion, welche ein ringförmiges Abdichtungselement (13) besitzt, eingesetzt.

FIG.2

EP 0 414 891 A1

# VARFAHREN ZUR GRABENLOSEN VERLEGUNG VON RONRLEITUNGEN UND VORRICHTUNG ZU DESSEN DURCHFÜHRUNG

Technisches Gebiet

Die vorliegende Erfindung bezieht sich auf Ausrüstungen zum Erdbodenaushub und -beförderung und betrifft insbesondere ein Verfahren zur grabenlosen Verlegung von Rohrleitungen und eine Vorrichtung zu dessen Durchführung.

Mit dem grössten Nutzeffekt kann die vorliegende Erfindung beim Verlegen von Rohrleitungen mit einem Durchmesser von 300 bis 800 mm verwendet werden.

Zugrundeliegender Stand der Technik

Es ist ein Verfahren zur grabenlosen Verlegung von Rohrleitungen bekannt, das darin besteht, dass man durch den Erdboden in vorgegebener Richtung eine Rohrleitung durchdrückt, welche über einen Vertikalschacht abgesenkt wird.

Es ist eine Vorrichtung zur grabenlosen Verlegung von Rohrleitungen bekannt, die eine in der Schachtkammer zur Bewegung der durchzudrükkenden Rohre angeordnete Kraftanlage und eine Vorrichtung zur Entfernung und Beförderung von Erdboden enthält (SU, A, 662669).

Ein Nachteil des genannten Verfahrens und der genannten Vorrichtung liegt darin, dass die Durchdrücklänge von Rohrleitungen begrenzt ist. Die Begrenzung der Durchdrücklänge entsteht dadurch, dass die gesamte Kraft der Kraftanlage am Stirnende des in der Schachtkemmer befindlichen Rohres angreift, dessen Festigkeit und Steifigkeit niedrig sind, was zum Verformen (Quetschen) der Rohrleistung in Durchdrückrichtung führen kann.

Es ist ein Verfahren zur grabenlosen Verlegung von Rohrleitungen bekannt, das darin besteht, dass man durch den Erdboden in vorgegebener Richtung Rohrleitungssektionen durchdrückt, welche über einen von zwei Vertikalschächten vorgeschoben und mit dem fortschreitenden Durchdrücken über den zweiten Vertikalschacht mit anschliessender Verlegung einer stationären Rohrleitung entfernt werden. Dabei wird Erdboden bei gleichzeitigem Durchdrücken jeder Rohrleitungssektion unter Verwendung von Schnecken oder Erdbodenaushuborganen und Fördermitteln zur Erdbodenbeseitigung entfernt. Bei einem solchen Verfahren zur Verlegung von Rohrleitungen kommen Rohrleitungssektionen zum Einsatz, deren Arbeitsdurchmesser wesentlich grösser als der Durchmesser der stationär zu verlegenden Rohrleitungen ist, was dadurch bedingt ist, dass Bodenabbau- und entfernungsmittel in diesen Sektionen untergebracht werden müssen.

Derartige Verfahren bedürfen ausserdem erheblicher technischer und materieller Mittel und sind sehr teuer und materialaufwendig.

Die Vorrichtung, mit der das Verfahren durchgeführt wird, enthält eine Kraftanlage, die mit dem hinteren Stirnende jeder Rohrleitungssektion mit dem fortschreitenden Durchdrücken der letzteren durch den Erdbocen zusammenwirkt, zumindest eine hydraulische Zwischenkraftanlage, die zwischen zwei benachbarten, bei dem Durchdrücken relativ zueinander bewegbar angeordneten Rohrleitungssektionen untergebracht ist, und eine Vorrichtung zum Bodenaushub und -beförderung. Die Zwischenkraftanlage ist mit Hydraulikzylindern ausgebildet, die am Umfang innerhalb der Rohrleitungssektionen angebracht sind (DE, A, 3122710).

Ein Nachteil der besagten Vorrichtung besteht darin, dass die Hydraulikzylinder der Zwischenkraftanlage in der Rohrleitung unter beengten Bodenabbauverhältnissen den Arbeitsnutzraum einschränken. Bei einer solchen konstruktiven Ausführung der hydraulischen Zwischenkraftanlage wird der Zugang des Bedienungspersonals und der Ausrüstung zum Ort sowie die Beförderung des ausgehobenen Erdbodens in die Schachtkammer erschwert, was die Leistungsfähigkeit der Vorrichtung vermindert. Ein weiterer Nachteil ist darin zu sehen, dass die hydraulischen Kraftzylinder an den benachbarten zu verlegenden dünnwandigen Rohrleitungssektionen fest angebracht sind und die von ihnen zu übertragenden erheblichen Kräfte die Rohrleitungssektion verformen können, was die Zuverlässigkeit der Vorrichtung vermindert.

Offenbarung der Erfindung

Der Erfindung liegt die Aufgabe zugrunde, ein solches Verfahren zur grabenlosen Verlegung von Rohrleitungen und eine solche Vorrichtung zu dessen Durchführung zu schaffen, bei denen das Durchdrücken der Rohrleitungssektionen durch den Erdboden und die Bodenbeseitigung so erfolgen, dass die Prozessleistung bei der Rohrleitungsverlegung erhöht wird, die Anzahl der im Verlegungsprozess zum Einsatz kommenden Ausrüstungen reduziert wird, und die sogar zum Verlegen von Förderleitungen mit einem Durchmesser von 300 bis 800 mm verwendet werden können.

Diese Aufgabe wird dadurch gelöst, dass in einem Verfahren zur grabenlosen Rohrleitungsverlegung, bei dem man durch den Erdboden in vorgegebener Richtung Rohrleitungssektionen durchdrückt, die man über einen von zwei Vertikalschächten vorschiebt und sie mit dem fortschreitenden Durchdrücken über den zweiten Schacht unter gleichzeitiger Verlegung einer stationären Rohrleitung entfernt, erfindungsgemäss während des Durchdrückens der Sektionen auf der gesamten Rohrleitungslänge der Erdboden eines dem Innendurchmesser der Sektionen gleichen Durchmessers durch diese vom Hauptmassiv abgetrenntwird und gegenüber demselben innerhalb der sich in Durchdrückrichtung bewegenden Sektionen unbeweglich bleibt und diese Sektionen samt dem in ihnen befindlichen Erdboden in dem Masse, wie sie in den zweiten Schacht austreten, entfernt werden.

Durch die Entfernung jeder Rohrleitungssektion samt dem Erdboden wird folgendes erzielt: die stationäre Rohrleitung kann ohne den Erdboden zerstörende Abbauausrüstung und ohne Transportmittel zur Beförderung des Erdbodens aus den Sektionen verlegt werden; die stationäre Rohrleitung kann unmittelbar in den Erdboden und z.B. in wassergesättigte Böden ohne Sonderverfahren zur Befestigung der Abbaustelle verlegt werden; es können Rohrleitungen erheblicher Länge verlegt werden.

In der Vorrichtung zur Durchführung des erfindungsgemässen Verfahrens zur grabenlosen Verlegung von Rohrieitungen, umfassend Rohrleitungssektionen, eine Kraftanlage, die mit dem hinteren Stirnende jeder der Rohrleitungssektionen mit deren fortschreitendem Durchdrücken durch den Erdboden zusammenwirkt, und zumindest eine hydraulische Zwischenkraftanlage, die zwischen zwei benachbarten, beim Durchdrücken relativ zueinander bewegbar angeordneten Rohrleitungssektionen untergebracht ist, erfindungsgemäss die hydraulische Zwischenkraftanlage zwei koaxial angeordnete Ringe enthält, die am hinteren Stirnende der vorhergehenden Sektion unter Bildung eines Ringspaltes zwischen ihnen starr befestigt sind, wobei sich im Ringspalt das vordere Stirnende der nachfolgenden Sektion befindet, das mit einem ringförmigen Abdichtungselement versehen ist, welches mit dem hinteren Stirnende der vorhergehenden Sektion einen ringförmigen Hohlraum bildet, der über eine im Aussenring hergestellte Radialöffnung mit einem Hydrauliksystem in Verbindung steht, wobei an den Ringen Begrenzer für die Bewegungen der nachfolgenden Sektion angebracht sind, in deren vorderem Stirnende Längsführungen für die Begrenzer vorgesehen sind.

Die Längsführungen für die Begrenzer können vorzugsweise in Form von durchgehenden Schlitzen ausgebildet werden, und jeder Begrenzer kann mit den beiden Ringen fest verbunden werden.

Am Aussenring kann nahe der Radialöffnung vorteilhafterweise ein Schutzschirm für die Hauptspeiseleitung des Hydrauliksystems angebracht werden, was die Beschädigung der letzteren durch den Erdboden beim Durchdrücken der Sektion durch ihn ausschliessen soll.

Eine solche konstruktive Ausführung der hydraulischen Zwischenkraftanlage ist im Vergleich zu Hydraulikzylindern einfacher, sie versperrt den Innenraum der Sektionen nicht, woraus sich die Möglichkeit ergibt, die Reibungskraft des Erdbodens an der Innenfläche der Sektionen zu vermindern sowie den Zugang zum Erdboden zwecks dessen Entfernung erheblich zu erleichtern, wenn die Notwendigkeit auftritt, spezielle gesteinzerstörende Organe und Bodenbeförderungsmittel, beispielsweise bei der Verlegung von Rohrleitungen grossen Durchmessers, einzusetzen.

Ausserdem kann durch Einwirkung der Durchdrückkräfte auf das Stirnende der Sektion die Konzentration der zu übertragenden Kräzte von einer Sektion auf die andere und somit die Verformung der Sektionen vermieden werden.

Die vorgeschlagene Konstruktion der Zwischenkraftanlage hat geringe Abmessungen, ist zuverlässiger und ermöglicht es, durch die Entfernung des Erdbodens zusammen mit den Sektionen den Arbeitsaufwand bei der Verlegung einer Rohrleitung zu verringern, die Verlegungskosten zu senken und die Leistung zu erhöhen.

Beschreibung

Im folgenden wird die Erfindung an Hand der Beschreibung eines Beispiels für deren Ausführung mit Hinweisen auf Zeichnungen näher erläutert.
Es zeigt:

Fig. 1 in schematischer Darstellung die Verlegung von Rohrleitungssektionen, gemäss der Erfindung;

Fig. 2 das Prinzipschema für die Vorrichtung zur grabenlosen Verlegung von Rohrleitungen, gemäss der Erfindung;

Fig. 3 in schematischer Darstellung die bauliche Gestaltung der hydraulischen Zwischenkraftanlage der Vorrichtung;

Fig. 4 dasselbe wie in Fig. 3 nach der Verschiebung einer nachfolgenden Sekticn;

Fig. 5 die Baugruppe A von Fig. 4;

Fig. 6 einen Schnitt nach Linie VI-VI in Fig. 4;

Fig. 7 eine Ausführungsvariante für die Befestigung der Ringe der Kraftanlage nach Fig. 3;

Fig. 8 eine weitere Ausführungsvariante für die Befestigung der Ringe der Kraftanlage nach Fig. 3;

Fig. 9 das Prinzipschema für die Vorrichtung zur grabenlosen Verlegung von Rohrleitungen unter Benutzung eines mechanischen Bodenentfernungsmittels.

Ausführungsform der Erfindung

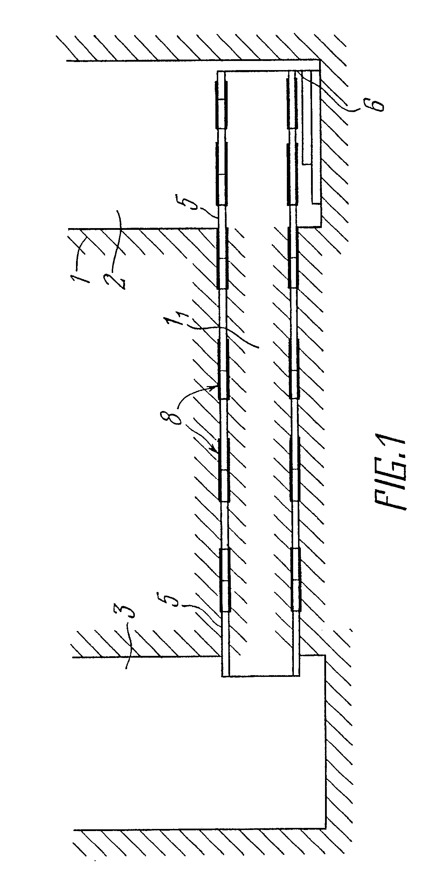

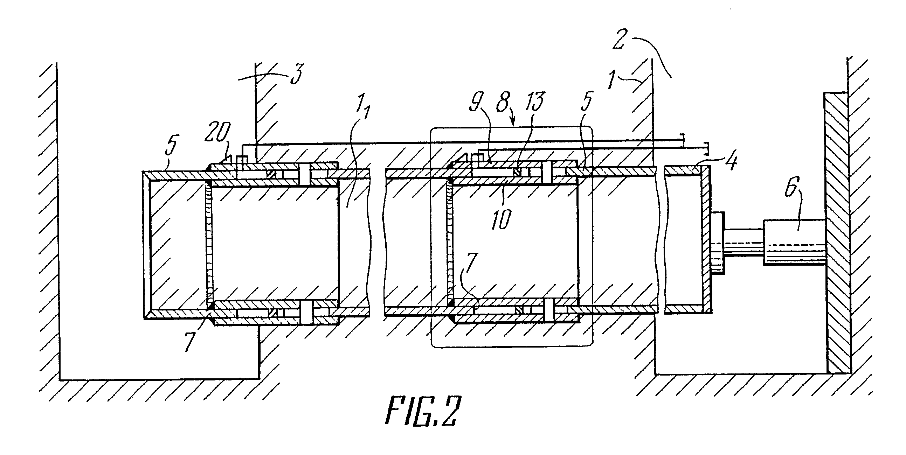

Das Verfahren zur grabenlosen Verlegung von Rohrleitungen besteht darin, dass man im Erdboden 1 zwei Vertikalschächte 2 und 3 (Fig. 1) niederbringt, zwischen denen durch den Erdboden 1 eine stationäre Rohrleitung 4 (Fig. 2) verlegt wird. Hierfür werden aus dem Schacht 2 durch den Erdboden 1 in vorgegebener Richtung (d.h. in Richtung auf den Schacht 3) Rohrleitungssektionen 5 durchgedrückt und in dem Maße, wie sie durchgedrückt werden und in den Schacht 3 austreten, unter gleichzeitiger Verlegung einer stationären Rohrleitung 4 entfernt. Dabei wird im Laufe des Verlegens der Sektionen 5 der Erdboden $1_1$ eines dem Innendurchmesser der Sektionen 5 gleichen Durchmessers auf der gesamten Rohrleitungslänge vom Hauptmassiv des Erdbodens 1 abgetrennt und bleibt gegenüber dem Hauptmassiv innerhalb der sich in Richtung zum Schacht 3 bewegenden Sektionen 5 unbeweglich. In dem Maße, wie die Sektionen 5 in den Schacht 3 austreten, werden sie samt dem in ihnen befindlichen Erdboden $1_1$ entfernt, wobei sich in der ersten durch den Erdboden durchgedrückten Sektion 5 eine Teilmenge an abgetrenntem, vor dem Austritt in den Schacht 3 befindlichem Erdboden befindet, weil für seine Entfernung nichts im Wege steht. Die Verlegung der stationären Rohrleitung 4 erfolgt, wie bereits oben erwähnt, mit dem fortschreitenden Beseitigen der Sektionen 5 samt dem Erdboden $1_1$ nach einem beliebigen bekannten Verfahren.

Die Vorrichtung, mit der das erfindungsgemässe Verfahren durchgeführt wird, enthält: Rohrleitungssektionen 5 (Fig. 1, 2), eine Kraftanlage 6, die eine beliebige bekannte Ausführung haben kann und auf das hintere Stirnende 7 jeder Sektion einwirkt, um diese durch den Erdboden 1 durchzudrücken, und hydraulische Zwischenkraftanlagen 8, die sich jeweils zwischen zwei benachbarten Sektionen 5, wie dies aus Fig. 1,2,3,4 ersichtlich ist, befindet, wobei die Sektionen 5 die Möglichkeit einer relativen Verschiebung zueinander bei deren Durchdrücken haben.

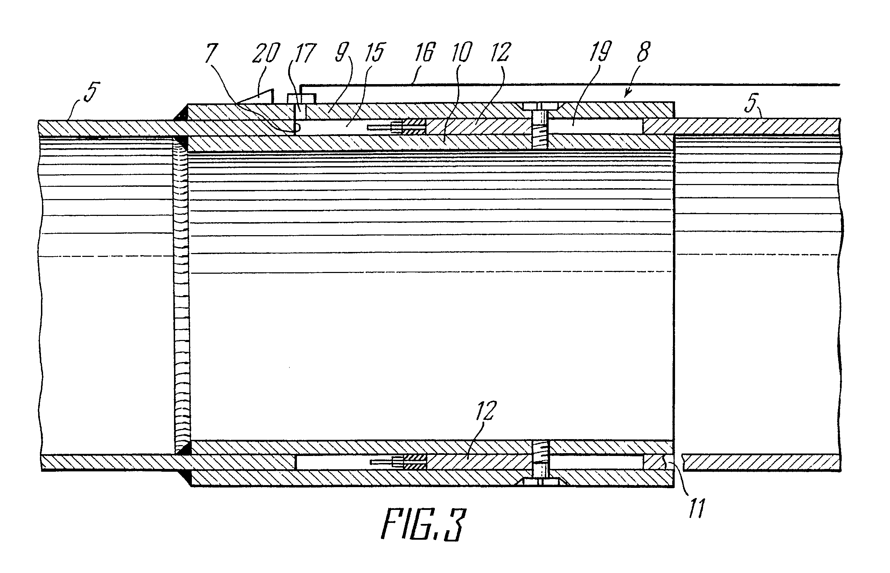

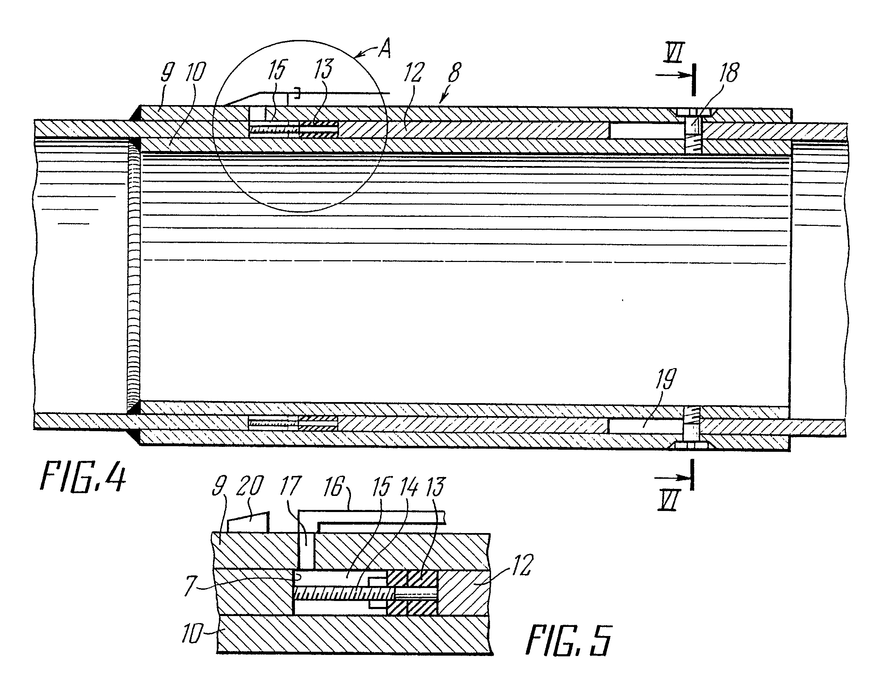

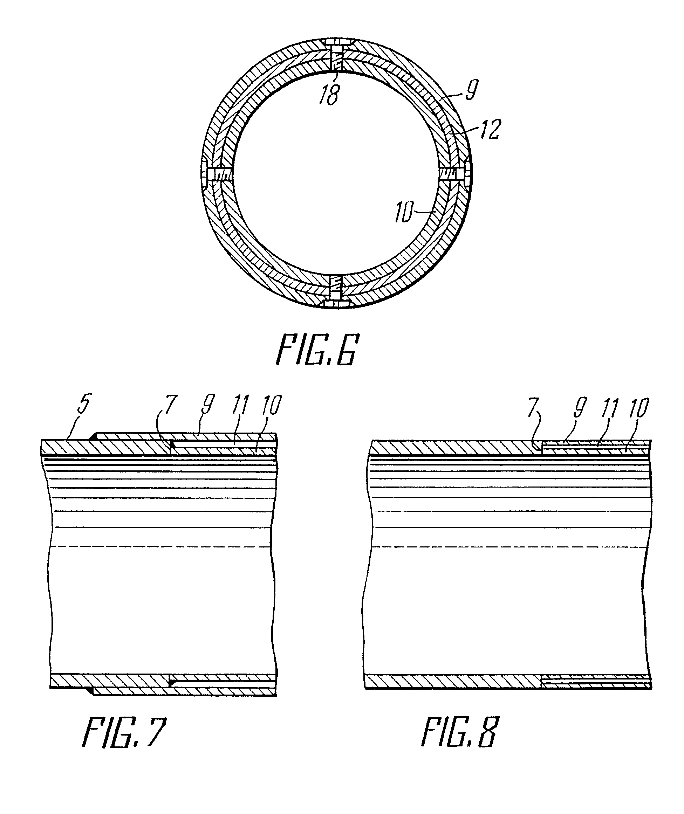

Jede hydraulische Zwischenkraftanlage 8 (Fig. 3, 4) enthält zwei koaxial angeordnete Ringe - einen Aussenring 9 und einen Innenring 10. Die Ringe 9 und 10 sind am hinteren Stirnende 7 der vorangehenden Sektion 5 unter Bildung eines Ringspaltes 11 (Fig. 3) zwischen ihnen starr befestigt. Im Ringspalt 11 befindet sich das vordere Stirnende 12 der nachfolgenden Sektion. Am vorderen Stirnende 12 jeder nachfolgenden Sektion 5 ist ein ringförmiges Abdichtungselement 13 (Fig. 5) z.B. in Form einer elastischen Einlage montiert, die mittels eines Gewindeelementes 14 festgehalten wird. Das ringförmige Abdichtungselement 13 bildet mit dem hinteren Stirnende 7 der vorangehenden Sektion 5 einen ringförmigen Hohlraum 15, der über eine Hauptspeiseleitung 16, welche in eine im Aussenring 9 eingebrachte Radialöffnung 17 eingebaut ist, mit einem in Fig.1 bis 5 nicht gezeigten Hydrauliksystem in Verbindung steht.

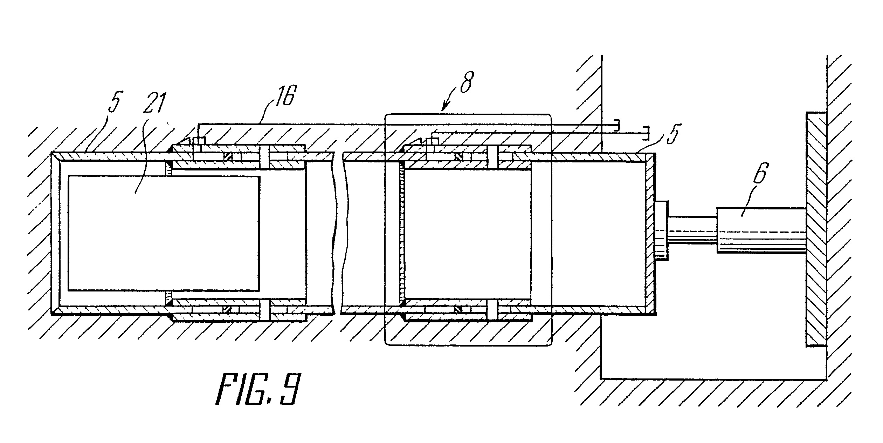

An den Ringen 9 und 10 sind Begrenzer 18 (Fig. 4, 6) für die Verschiebungen der nachfolgenden Sektion 5 angebracht, die beispielsweise in Form von Schrauben ausgebildet sind, die wie in Fig. 6 gezeigt angeordnet und mit den beiden Ringen 9 und 10 verbunden sind. Dabei sind am vorderen Stirnende 12 (Fig. 3, 4) jeder nachfolgenden Sektion Längsführungen für die Begrenzer 18 vorgesehen, die beispielsweise in Form von durchgehenden Schlitzen 19 ausgebildet sind.

Am Aussenring 9 ist nahe der Radialöffnung 17 ein Schutzblech 20 befestigt, das zum Schutz der Hauptspeiseleitung 16 gegen Beschädigung durch den Erdboden beim Durchdrücken der Sektionen 5 bestimmt ist.

Die Ringe 9 und 10 werden am hinteren Stirnende 7 der vorangehenden Sektion 5 dies überlappend befestigt, wie dies in Fig. 3 und 4 gezeigt ist. Die Ringe 9 und 10 können jedoch auch so befestigt werden, wie dies die Fig. 7 und 8 zeigen.

In der Ausführungsform der Erfindung, die in Fig. 7 dargestellt ist, wird der Aussenring an der Aussenfläche der Sektion 5(z.B. durch Schweißen) befestigt, während der Ring 10 zur Bildung eines Spaltes 11 zwischen ihnen eine kleinere Dicke als die des Stirnendes 7 der Sektion aufweist und am Stirnende 7 stumpf angeschweisst wird, wie dies in Fig. 7 gezeigt ist.

In der Ausführungsform der Erfindung, die in Fig. 8 dargestellt ist, haben die Ringe 9 und 10 eine wesentlich kleinere Dicke als die des Stirnendes 7, und werden direkt am Stirnende 7, wie dies Fig. 8 zeigt, unter Bildung eines Spaltes 11 zwischen ihnen stumpf befestigt.

Die hydraulische Zwischenkraftanlage 8 kann unmittelbar zwischen zwei benachbarten Sektionen beim Verlegen der Rohrleitungen geformt werden oder als Einzelblöcke ausgebildet werden, die zwischen den Rohrleitungssektionen aufzustellen sind.

Die Wirkungsweise der erfindungsgemässen Vorrichtung ist wie folgt.

Man drückt die erste Rohrleitungssektion 5 (Fig. 2) aus dem Schacht 2 mittels der Kraftanlage 9 durch, die auf das Stirnende 7 dieser Sektion einwirkt, so dass die Sektion in den Boden 1 eingedrückt wird, wobei der Boden $1_1$ eines dem Durchmesser der Sektion gleichen Durchmessers vom Hauptmassiv abgetrennt wird und in bezug auf dieses unbeweglich bleibt, während die Sektion 5 sich vorwärts in Richtung zum Schacht 3 weiterbewegt. Der Fortbewegung des Bodens $1_1$ gemeinsam mit der Sektion 5 steht der vor ihm befindliche Boden im Wege. Nachdem die erste Sektion in den Boden eingetreten ist, wird die Zwischenkraftanlage 8 aufgestellt oder in den Ringspalt 11 zwischen die am hinteren Stirnende 7 dieser Sektion befestigten Ringe 9 und 10 wird das vordere Stirnende 12 der nachfolgenden Sektion, welches das Abdichtungselement 13 trägt, eingeführt und mittels der Begrenzer 18 festgestellt, die in koaxiäle, in den Ringen 9 und 10 ausgeführte Radialöffnungen eingesetzt werden und durch die Schlitze 19 durchgehen, und auf diese Weise wird die Zwischenkraftanlage 8 geformt. Dabei wird in den gebildeten ringförmigen Hohlraum 15 über die Hauptleitung 16 und die Öffnung 17 im hinteren Stirnende 7 der ersten Sektion ein Druck aus dem ( nicht gezeigten) Hydrauliksystem zugeführt, der die erste Sektion weiter in den Boden um die Länge des Schlitzes 17 treibt, wobei die Durchdrückkraft sich gleichmässig auf dem Stirnende 7 verteilt, was ein Verformen (Quetschen) der Sektion ausschließt, und wobei der Verschiebung der nachfolgenden Sektion die auf ihr Stirnende einwirkende Kraftanlage 6 entgegen wirkt.

Weiterhin wird die nächste Sektion 5 von der Zwischenkraftanlage 8 wie vorstehend beschrieben oder unmittelbar von der Kraftanlage 6 durchgedrückt.

Dann wiederholt sich der Zyklus.

Nach dem Austritt der ersten Sektion 5 in den Schacht 3 wird diese Sektion samt dem in ihr befindlichen Boden entfernt und an ihre Stelle eine nächstfolgende Sektion mit dem Boden in obenbeschriebener Weise durchgedrückt. In dem Maße, wie die Sektionen samt dem Boden entfernt werden, werden in den gebildeten Raum die stationäre Rohrleitung sektionsweise durchgezogen oder montiert.

Beim Verlegen von Rohrleitungen grösserer Durchmesser, grösser als 1,0 m, kann man die Entfernung des Bodens mit Hilfe einer beliebigen bekannten Vorrichtung 21 (Fig. 9), beispielsweise einer Schnecke oder eines beliebigen anderen gesteinzerstörenden Organs mit einem Transportmittel zur Bodenbeseitigung durchführen.

Gewerbliche Verwertbarkeit

Das erfindungsgemässe Verfahren zur grabenlosen Vorlegung von Rohrleitungen lässt sich mit grossem Erfolg zum Verlegen von Rohrleitungen mit 300 bis 800 mm Durchmesser anwenden, bei dem es schwierig ist, mechanische Mittel zur Bodenbeseitigung einzusetzen.

Die erfindungsgemässe Vorrichtung zur grabenlosen Verlegung von Rohrleitungen kann sowohl zum Verlegen von Rohrleitungen mit einem Durchmesser von 300 bis 800 mm nach dem beschriebenen Verfahren (ohne mechanische Mittel zur Bodenbeseitigung)als auch unter Benutzung mechanischer Mittel zur Bodenzerstörung und -beseitigung beim Verlegen von Rohrleitungen mit einem grösseren Durchmesser als angegeben verwendet werden.

**Ansprüche**

1. Verfahren zur grabenlosen Verlegung von Rohrleitungen, bei dem man durch den Erdboden in vorgegebener Richtung Rohrleitungssektionen durchdrückt, die man aus einem von zwei Vertikalschächten vorschiebt, und sie mit dem fortschreitenden Durchdrücken über den zweiten Schacht unter gleichzeitiger Verlegung einer stationären Rohrleitung entfernt, dadurch **gekennzeichnet,** dass während des Durchdrückens der Sektionen auf der gesamten Rohrleitungslänge der Erdboden eines dem Innendurchmesser der Sektionen gleichen Durchmessers durch diese vom Hauptmassiv abgetrennt wird und gegenüber demselben innerhalb der sich in Durchdrückrichtung bewegenden Sektionen unbeweglich bleibt und diese Sektionen samt dem in ihnen befindlichen Erdboden in dem Maße , wie sie in den zweiten Schacht austreten, entfernt werden.

2. Vorrichtung zur grabenlosen Verlegung von Rohrleitungen, umfassend Rohrleitungssektionen (5), eine Kraftanlage (6), die mit dem hinteren Stirnende (7) jeder der Rohrleitungssektionen (5) mit deren fortschreitendem Durchdrücken durch den Erdboden zusammenwirkt, und zumindest eine hydraulische Zwischenkraftanlage (8), die zwischen zwei benachbarten, während des Durchdrückens relativ zueinander bewegbar angeordneten Rohrleitungssektionen (5) untergebracht ist, dadurch **gekennzeichnet,** dass die hydraulische Zwischenkraftanlage (8) zwei koaxial angeordnete Ringe (9 und 10) enthält, die am hinteren Stirnende (7) der vorhergehenden Sektion (5) unter Bildung eines Ringspaltes (11) zwischen ihnen starr befestigt sind, wobei sich im Ringspalt (11) das vordere Stirnende (12) der nachfolgenden Sektion (5) befindet, das mit einem ringförmigen Abdichtungselement (13) versehen ist, welches mit dem hinteren Stirnende (7) der vorhergehenden Sektion einen ringförmigen Hohlraum (15) bildet, der über eine im Aussenring (9) hergestellte Radialöffnung (17) mit einem Hydrauliksystem in Verbindung steht, wobei an den Ringen (9, 10) Begrenzer (18) für die Bewegungen der nachfolgenden Sektion angebracht sind, in deren vorderem Stirnende Langsführungen für die Begrenzer (18) vorgesehen sind.

3.  Vorrichtung nach Anspruch 2, dadurch **gekennzeichnet,** dass die Längsführungen für die Begrenzer (18) in Form von durchgehenden Schlitzen (17) ausgebildet sind und jeder Begrenzer (18) mit beiden Ringen (9 und 10) fest verbunden ist.

4.  Vorrichtung nach Anspruch 2 oder 3, dadurch **gekennzeichnet,** dass am Aussenring (9) nahe der Radialöffnung (17) ein Schutzschirm (20) für die Hauptspeiseleitung (16) des Hydrauliksystems angebracht ist.

FIG.1

FIG.2

EP 0 414 891 A1

FIG.3

EP 0 414 891 A1

FIG.4

FIG.5

EP 0 414 891 A1

FIG.6

FIG.7

FIG.8

FIG.9

# INTERNATIONAL SEARCH REPORT

International Application No PCT/SU 89/00006

## I. CLASSIFICATION OF SUBJECT MATTER (If several classification symbols apply, indicate all) *

According to International Patent Classification (IPC) or to both National Classification and IPC

IPC$^4$   E 02 F 5/18, F 16 L 1/02

## II. FIELDS SEARCHED

| Minimum Documentation Searched |
|---|

| Classification System | Classification Symbols |
|---|---|
| IPC$^4$ | E 02 F 5/10, 5/16, 5/18, F 16 L 1/02, E 21 D 9/00 |

| Documentation Searched other than Minimum Documentation to the Extent that such Documents are Included in the Fields Searched * |
|---|
|  |

## III. DOCUMENTS CONSIDERED TO BE RELEVANT *

| Category * | Citation of Document, " with indication, where appropriate, of the relevant passages ¹² | Relevant to Claim No. ¹³ |
|---|---|---|
| X | Bestransheinaya ukladka truboprovodov, 1956, Gosudarstvennoe izdatelstvo litezetury po stroitelstvu i arkhitekture (Moscow), pages 4-7 | 1 |
| A | N.Ya. Kershenbaum et al. "Prokhodka gorizontalnykh i vertikalnykh skvazhin udarnym sposobom", 1984, Nedra (Moscow), pages 22-24 | 2-4 |
| A | US, 3169376, (WESLEY B. CUNNINGHAM), 16 February 1965 (16.02.65), see the claims, figures 4,7,8 | 2-4 |

* Special categories of cited documents: ¹⁰
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance: the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art.
"&" document member of the same patent family

## IV. CERTIFICATION

| Date of the Actual Completion of the International Search | Date of Mailing of this International Search Report |
|---|---|
| 15 March 1989 (15.03.89) | 25 April 1989 (25.04.89) |

| International Searching Authority | Signature of Authorized Officer |
|---|---|
| ISA/SU | |

Form PCT/ISA/210 (second sheet) (January 1985)